(19) Europäisches Patentamt
European Patent Office
Office européen des brevets

(11) Publication number: 0 023 759 B1

(12) EUROPEAN PATENT SPECIFICATION

(45) Date of publication of patent specification: 05.02.86

(51) Int. Cl.$^4$: C 21 C 7/072

(21) Application number: 80302088.2

(22) Date of filing: 20.06.80

# (54) Method of recycling steel scrap.

(30) Priority: 29.06.79 US 53700

(43) Date of publication of application: 11.02.81 Bulletin 81/06

(45) Publication of the grant of the patent: 05.02.86 Bulletin 86/06

(84) Designated Contracting States: AT BE CH DE FR GB IT LI LU NL SE

(56) References cited:
EP-A-0 005 506
DE-A-2 429 489
DE-C- 934 772
FR-A-2 194 780
GB-A- 852 142
GB-A-1 111 402
GB-A-1 258 451
US-A-1 034 785
US-A-3 060 015
US-A-3 219 440
US-A-3 503 597

(73) Proprietor: Moore, William H.
Whitehall Apts. -6E Whitehall Road
Chattanooga Tennessee 37405 (US)

(73) Proprietor: Kessler, Harry H.
No. 7 Dromara Road
St. Louis Missouri 63124 (US)

(72) Inventor: Moore, William H.
Whitehall Apts. -6E Whitehall Road
Chattanooga Tennessee 37405 (US)
Inventor: Kessler, Harry H.
No. 7 Dromara Road
St. Louis Missouri 63124 (US)

(74) Representative: Wisher, Michael Frederick et al
Urquhart-Dykes & Lord 47 Marylebone Lane
London W1M 6DL (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 023 759 B1

## Description

This invention relates to a method of recycling steel scrap.

In the iron and steel industry there is a long history of technical developments and improvements in the processes of iron and steel making, but there nevertheless remains a requirement for techincal and commercial improvements in the processes available for the recycling of steel scrap. The large quantities of foundry rejects which are inevitably produced by any steel foundary represent an immediate application for such an improved process. Such foundry rejects could then be immediately recycled and used to produce castings of an acceptable quality.

Among presently available processes for the recycling of steel scrap is the well-known oxygen boil technique which not only reduces significantly the carbon content of the melt but also oxidises silicon and manganese, with the result that these elements have to be replaced at a considerable cost penalty. Moreover, the oxygen boil produces copious quantities of slag which must be removed, and the technique produces a "wild" melt which tends to produce gas holes in a casting produced by pouring such a melt.

An object of the present invention is to provide a process of recycling steel scrap offering improvements in relation to some at least of the shortcomings of the prior art as discussed herein.

According to the invention there is provided a method of producing molten steel from steel scrap as defined in the accompanying claims.

There is disclosed below an embodiment of the invention which produces a steel that is low in gas content, and exceptionally clean, the steel having a high order of physical properties. Moreover, this steel is produced without introducing oxygen into the melt, with all the attendent problems which that brings.

The embodiments of the invention disclosed below also provide a steel of decreased inclusion count and improved physical properties. Moreover, the embodiments include the use of "back charging" induction furnaces, whereby the efficiency of the latter is increased. The steel can be produced in low and medium frequency induction and arc furnaces without problems associated with the gas content of the metal.

A further advantage provided by the embodiments is the avoidance of "wild" metal. The molten metal is poured without the formation of gas holes or the necessity of introducing large quantities of deoxidizing agent to remove the gas hole potential of the molten metal.

Another aspect of the disclosed embodiments is their economy in relation to the use of silicon and manganese. Also, only relatively small amounts of slag are produced.

Embodiments of the invention will now be described by way of example with reference to the accompanying drawings in which:

Fig. 1 is a block diagram illustrating the conventional process of refining ferrous metal by oxygen treatment;

Fig. 2 shows a block diagram illustrating the method of the invention;

Fig. 3 shows a partial cross-sectional view of a typical commercial embodiment of an inducation furnace for use in the method of the invention; and

Fig. 4 is a photomicrograph of the steel produced by an embodiment of the invention, indicating the relative nature and the amount of the non-metallic inclusions involved.

In the manufacture of steel it is important to remove all of the gases contained by the raw material and to obtain the right percentage of consistuent elements.

To control the proportions of these gases and elements, and particularly carbon and oxygen, various techniques have been developed.

Fig. 1 shows in diagrammatic form the prior art process from which the present invention commences.

In this prior technique the ferrous metal to be processed contains an excess quantity of carbon over that desired in the final product.

In step 1, the metal is heated. The usual practice is to promote an active boil in the heated molten metal (melt) designed to remove the undesirable gases and elements from the ferrous metal. It is seldom that a "melt" is made without movement within the bath, since to make such a melt successfully the ferrous metal so processed must be completely free of oxides such as rust, which contains water, and the atmosphere above the melt must be kept purged of moisture laden air to avoid hydrogen or nitrogen pickup.

The boil is produced in this technique by the injection of gaseous oxygen into the melt or by natural reaction between oxides and carbon (Step 2). The oxygen is supposed to react with the carbon in the bath to produce carbon monoxide gas. This reduces the amount of carbon in the melt and provides an important index of the quality and measure of the steel making process.

The carbon monoxide gas produced causes a boiling action in the melt designed to remove other unwanted gases and elements (such as nitrogen and hydrogen). Unfortunately the oxygen injected acts immediately to oxidize or burn out the silicon, manganese and other important desired elements before it begins to react with the carbon in the melt to produce the carbon monoxide necessary for the boil.

This produces large copious quantities of slag which must be removed (Step 3). The bath must also be "blocked" by the addition of manganese silicon or similar material (Step 4).

It also produces a high degree of oxidation in the melt. Not only is any oxidation itself harmful to steel but also this causes a "wild" melt. A "wild" melt cannot be poured as such because the poured shape would contain large gas holes. A large quantity of a deoxidizing metal (aluminum, calcium etc.) must be added to the melt to remove this problem (Step 5). These

deoxidizing metals must be removed at a later step or these inclusions, depending upon their size, shape and amount, can exert a harmful effect on the physical properties of the steel, particularly the impact value (Step 6).

The oxygen boil also forms a very large amount of iron oxide which pollutes the atmosphere above the furnace. This and other oxides also contaminate the melt itself in large quantities.

A large problem with the oxygen boil technique deals with the efficiency of operation of an induction furnace vs. the method of operation of the technique.

In production ferrous metal in a low frequency induction furnace starting from a cold storage is extremely time-consuming, it is customary to use a large metal starting block for starting up and it is then customary to keep power on around the clock so that the furnace always contains molten metal. When molten metal is drawn from the furance, it is replaced by solid charge material. This process is known as "back charging" which avoids the necessity of starting the furnace from a cold condition with a complete charge of solid metal.

In attempting to produce steel by the process of back charging, it, of course, is impossible to boil the bath by conventional means because all elements such as silicon and manganese would be removed before the effective boil commences. This would have to be repeated for each subsequent charge that would be added as a "back charge". This would create large quantities of slag. Normal "blocking" of the charge by adding replacement silicon and metal on each occasion would increase the cost of making steel using this "back charging" procedure.

Avoiding a boil would result in a metal containing large amounts of hydrogen and nitrogen gas which amount would be increased by each new charge of material added to the molten metal left in the furnace after each tap had been made. These would have to be subsequently removed.

In commercial practice attempts are frequently made to avoid a boil because of the physical problems that exist where boiling is used—particularly the necessity of scouring the lining to avoid the buildup of residues.

There is no satisfactory solution or compromise to these problems while using this technique.

Figure 2 demonstrates in block form a typical flow chart embodiment of our invention.

The technique also begins with a ferrous metal having a higher carbon content than desired being heated into a melt (Step A).

However, in contrast to the oxygen boil technique, our invention produces a boil with carbon dioxide gas (Step B). This technique completely removes unwanted gases and elements while solving most of the otherwise accompanying problems of the boil technique.

Carbon dioxide reacts with carbon according to the formula $CO_2+C \rightleftharpoons 2CO$. Since this reaction proceeds in the forward direction, $CO_2+C \rightarrow 2CO$, at a considerably faster rate at a higher temperature, it is preferable to heat the melt during the boil.

Since carbon dioxide does not react to any marked degree with silicon, manganese, etc. these important elements are not oxidizied out of the melt. This reduces markedly the quantity of slag that is produced by the steel making process (Step D).

The carbon dioxide itself does not appreciably oxidize the melt. This lowers the iron oxide production during the boiling process; the steel mill is cleaner.

It also lowers the potential of a "wild" melt so that in addition a lesser quantity of deoxidizing metal need be used in the melt (Step C); this is normally to the degree of removing any necessity of a separate manufacturing step to remove it.

In the alternative any excess carbon dioxide gas and oxides can also be removed from the melt by bubbling an inert gas such as argon through the steel (Step $C_1$), thereby avoiding any additional metal contamination altogether.

The bubbling of the carbon dioxide gas through a melt, particularly when the melt is being heated, gives a mechanical scrubbing action which removes hydrogen and nitrogen from the melt because of the partial pressure phenomenon which involves diffusion of these gases into bubbles of $CO_2$ artificially produced in the melt.

The carbon monoxide produced by the $CO_2+C \rightarrow 2CO$ reaction would, just as in regular boil technique, help remove gases from the melt.

In the process of our invention, we can produce steel readily in induction furnaces still using the very convenient method of "back charging". By flushing the melt with carbon dioxide continuously as each charge increment first becomes molten, all dissolved gases, such as nitrogen and hydrogen, are removed completely and replaced by carbon dioxide gas. This is accomplished without any appreciable loss of oxidizable elements, such as silicon, manganese, chromium and the like, contained in the metallic charge. Whenever a tap is made and molten steel is withdrawn from the furnace, the carbon dioxide left in the metal can be removed conveniently in the ladle by a simple deoxidizing addition of aluminum, calcium, magnesium, titanium, or the like.

Being able to produce steel successfully in these induction furnaces makes it possible to utilize power efficiently and also to produce steel in foundries normally confined to the manufacture of cast iron because of the melting unit used.

The amount of carbon dioxide used in boiling the steel bath is variable according to the quality of steel scrap used and the final content of nitrogen and hydrogen allowable in the steel. We usually use approximately 5 cubic feet (0.14 cubic metres) per ton (1.0161 tonnes) per minute for a period of approximately ten minutes. This results in a total consummation of 50 cubic feet per ton (1.39 cubic metres per tonne) of metal. This amount of carbon dioxide will usually result in a

subtraction of 0.05 to 0.15 from the percentage carbon content of the steel depending on the original level of carbon in the bath. The carbon removed in higher carbon heats (steels containing 0.4% carbon or more) is expectedly greater than that removed in lower carbon heats. With rusty scrap in the charge, the amount removed is greater than when the charge is relatively clean. Carbon removal from the bath normally would be expected to be from 5% to 30% of the carbon originally present whereas silicon and manganese would usually remain substantially unchanged.

The molten metal that has been processed with carbon dioxide contains a quantity of carbon dioxide dissolved in the metal. This can be removed by the addition of aluminum, titanium, calcium, barium, zirconium magnesium and the like, either singly or in combination. It is also possible to remove the carbon dioxide by flushing the bath with an inert gas, such as argon, prior to removing it from the furnace. We generally find that metallic aluminum is the most convenient material to use. It combines with carbon dioxide according to the formula

$$3\ CO_2+4\ AL \rightarrow 2AL_2O_3+3C.$$

This deoxidizing action releases a small quantity of carbon in the metal, but, because of the relatively low amount of carbon dioxide present, is insufficient to measurably alter the final carbon content of the metal.

In high chromium steels in particular, we find that oxidation of chromium during the melting process can be held to a minimum when utilizing the process of this invention. We feel that the atmosphere of carbon dioxide produced above the bath and the consequent exclusion of air from the metal surface is largely responsible for this beneficial result.

For the injection of carbon dioxide into the melt, we prefer to use a lance arrangement fitted with a porous plug at its lower extremity.

Figure 3 is a cross-sectional drawing of the upper portion of a typical coreless induction furnace typifying a lance usage.

Gas is supplied from an external source 10 into the supply pipe 11. The supply pipe 11 is fitted into the lance 12 and supplies gas to the porous lower end of the lance 12.

The lance 12 is made up of a refractory outer cover 13, refractory cement 14 holding the supply pipe 11 in place and a refractory porous body 15.

The outer cover 13 varies in diameter from about 1" to 6" or more depending on the surface area and volume of the melt 20. The porous body 15 can be conveniently made by ramming a refractory material such as alundum, silica, chromite or zirconite bonded with sodium silicate, boric acid or any other suitable refractory cement. The refractory material should be made of such an aggregate size that it is porous to the passage of carbon dioxide.

The lance 12 itself is connected to the top cover 16 of an induction furnace 17. Coils 18 in the furnace heat the interface material 19 which in turn heats the melt 20.

Although the embodiment is shown with a single lance in the center of the furnace the number and location of the lance will vary in relation to the material, surface area and volume of the melt. The lance can even be located in the lining of the furnace itself.

The gas being forced through the porous body 15 produces a large number of small bubbles which are more effective in promoting the chemical action required than the larger bubbles produced by a regular lance would be.

It is not necessary to inject the carbon dioxide at the bottom of the melt as normally would be expected. In all furnaces, and in induction furnaces in particular, there is a constant flow within the melt. This brings fresh metal to any particular point in the bath. By placing the lance only a short distance below the surface of the melt, metal that has not been subjected to the action of carbon dioxide is constantly brought into the vicinity of the lance so that in a very short time the complete bath is effectively subjected to the action of the carbon dioxide. In arc furnaces the movement of the metal is not so great, and in such a case, the lance is placed lower in the melt, moved to different positions in the melt or several lances are used. The bottom of the melt is a convenient place for locating a lance in an arc furnace.

We also find that purging a furnace with $CO_2$ prior to the commencement of melting in an arc furnace reduces the fume caused by arc melting and also prolongs the life of the electrodes (usually carbon) used for this purpose.

In addition the carbon dioxide, being heavier than air lies on top of the melt excluding air from the melt's surface and thereby providing a sealing barrier against pickup of hydrogen, nitrogen or oxygen from the air.

Our invention reduces the carbon content of a melt without a similar reduction in silicon and manganese and reduces the basic gas content of the melt to a very low value.

As an example of the process of the invention, we produced a melt of medium carbon steel in an induction furnace. The charge consisted of steel scrap containing 0.45% carbon, 0.46% manganese and 0.40% silicon.

After the charge was melted sample was removed; a porous plug lance as described in Figure 1 in the specification was immersed in the metal to a depth of about six inches and carbon dioxide gas was injected at the rate of 5 cubic feet per minute per ton of metal for a period of ten minutes at a pressure of approximately 12 psi. The power was left on during this injection period and a vigorous boil resulted.

After the boil was completed, the carbon dioxide gas was turned off and a second test sample was removed from the furnace. The metal was then tapped into a ladle to which 16 ounces per ton of aluminum had been added. A third test

sample was removed from the ladle and the metal was then cast. The three test samples taken during this heat were analyzed with the following results:

| Test Sample | % Carbon | % Silicon | % Manganese | p.p.m. Nitrogen | p.p.m. Hydrogen |
|---|---|---|---|---|---|
| #1 | 0.46 | 0.40 | 0.46 | 110 | 22 |
| #2 | 0.39 | 0.41 | 0.45 | 80 | 2 |
| #3 | 0.40 | 0.40 | 0.45 | 78 | 2 |

In another test a steel heat was melted and was boiled with carbon dioxide at a rate of 10 cubic feet per minute per ton of metal for a period of 12 minutes. This metal was deoxidized with 8 ounces per ton of aluminum and a test piece was cast and tested after heat treatment. The heat treatment consisted of annealing at 1750 degrees F., quenching in water and tempering at 1150°F.

The physical and chemical properties of this steel were as follows:—

| | |
|---|---|
| Carbon | 0.25% |
| Silicon | 0.31% |
| Manganese | 0.57% |
| Chromium | 0.54% |
| Nickel | 0.55% |
| Molybdenum | 0.53% |
| Nitrogen | 70 p.p.m. |
| Hydrogen | 3 p.p.m. |
| Aluminum | .06% |
| Ultimate strength | 127,250 psi |
| Yield strength | 87,500 psi |
| Reduction of area | 46.2% |
| Elongation | 17.5% |
| Hardness | Rc 27.4 |
| Notched Impact at −40°F | 35.2 |

This steel was exceptionally clean and had a low inclusion count where all inclusions were of the normal type. The residual non-metallic inclusions, the residual oxides, silicates, etc. are low (Figure 4).

In practicing the process of our invention, we have found that the injection of carbon dioxide into the furnace cavity, even before melting is conducted, provides a protective atmosphere. In an arc furnace, for example, the presence of carbon dioxide introduced in this matter reduces the amount of fume formed during the melt down process and also appears to decrease the rate of consumption of the carbon electrodes.

It is to be understood that the present disclosure of our invention has been made only by way of example and that numerous changes in the details and the combination and arrangement of the process may be resorted to without departing from the scope of the invention has hereinafter claimed.

**Claims**

1. A method of producing molten steel from steel scrap whereby the scrap is melted in an electric furnace and a gas is injected into the molten charge characterised in that during the entire period of heating from the melting temperaure to the tapping temperature a carbon dioxide containing gas devoid of oxygen is injected into the melt whereby between the melting and the tapping the concentrations of silicon and manganese remain substantially unchanged and the final carbon content is 5% to 30% lower than the initial carbon content.

2. A method according to claim 1 performed as a continuous process characterised by the steps of removing for use a proportion of the melt and re-charging the melt with scrap steel, said carbon dioxide containing gas being injected into the melt continuously while heating the melt.

3. A method according to claim 1 or claim 2 characterised in that the carbon dioxide is bubbled into the molten charge through a refractory porous body chosen from alundum silica chromite or zirconite.

4. A method according to any one of the preceeding claims characterised by the additional step of removing dissolved carbon dioxide gas from the molten steel removed from the furnace, by treatment of the removed steel with a metal selected from the group consisting of aluminum, magnesium, barium, calcium, zirconium, or titanium.

5. A method according to any one of claims 1 to 3 characterised by the additional step of removing dissolved carbon dioxide from said molten steel removed from the furnace, by flushing said steel with an inert gas.

6. A method according to any one of the preceding claims characterized in that the carbon dioxide is bubbled through the melt a short distance below the surface of the melt.

7. A method according to any one of the preceding claims characterised by the use of approximately 1.39 cubic metres of carbon dioxide per tonne of steel scrap.

8. A method according to any one of the preceding claims characterised in that said electric furnace is an arc furnace and the furnace is purged with carbon dioxide prior to commencement of melting.

**Revendications**

1. Procédé pour produire de l'acier fondu à partir de ferrailles, dans lequel les ferrailles sont fondues dans un four électrique, et un gaz est injecté dans la charge fondue, caractérisé en ce que, pendant la totalité de la période de chauffage de la température de fusion à la température de coulée, un gaz contenant du dioxyde de carbone et dépourvu d'oxygène est injecté dans la masse fondue, les concentrations du silicium et du manganèse demeurant essentiellement inchangées entre la fusion et la coulée et la teneur finale en carbone étant inférieure de 5 à 30% à la teneur initiale en carbone.

2. Procédé selon la revendication 1 effectué sous forme d'une opération continue, caractérisé par les stades de prélèvement pour utilisation d'une proportion de la masse fondue et de réalimentation de la masse fondue avec des ferrailles, ledit gaz contentant du dioxyde de carbone étant injecté en continu dans la masse fondue tandis que l'on chauffe la masse fondue.

3. Procédé selon la revendication 1 ou 1a revendication 2, caractérisé en ce qu'on fait barboter le dioxyde de carbone dans la charge fondue à travers un corps poreux réfractaire, choisi parmi les alundum, silice, chromite et zirconite.

4. Procédé selon l'une quelconque des revendications précédentes, caractérisé par le stade additionnel d'élimination du dioxyide de carbone gazeux dissous de l'acier fondu prélevé du four, par traitement de l'acier prélevé avec un métal choisi dans le groupe constitué par l'aluminium, le magnésium, le baryum, le calcium, le zirconium ou le titane.

5. Procédé selon l'une quelconque des revendications 1 à 3, caractérisé par le stade additionnel d'élimination du dioxyde de carbone dissous dudit acier fondu prélevé du four, par balayage dudit acier avec un gaz inerte.

6. Procédé selon l'une quelconque des revendications précédentes, caractérisé en ce que l'on fait barboter le dioxyde de carbone à travers la masse fondue à une courte distance en dessous de la surface de la masse fondue.

7. Procédé selon l'une quelconque des revendications précédentes, caractérisé par l'utilisation d'environ 1,39 $m^3$ de dioxyde de carbone par tonne de ferraille.

8. Procédé selon l'une quelconque des revendications précédentes, caractérisé en ce que ledit four électrique est un four à arc et en ce que ledit four est purgé avec du dioxyde de carbone avant le début de la fusion.

**Patentansprüche**

1. Verfahren zur Herstellung einer Stahlschmelze aus Stahlschrott, wobei der Schrott in einem elektrischen Ofen geschmolzen und ein Gas in die geschmolzene Charge injiziert wird, dadurch gekennzeichnet, daß während der gesamten Heizperiode von der Schmelztemperatur bis zur Abstichtemperatur ein Kohlendioxid enthaltendes Gas frei von Sauerstoff in die Schmelze injiziert wird, wobei zwischen Schmelzen und Abstechen die Konzentrationen von Silicium und Mangan im wesentlichen unverändert bleiben und der endgültige Kohlenstoffgehalt 5 % bis 30 % niedriger als der anfängliche Kohlenstoffgehalt ist.

2. Verfahren nach Anspruch 1, ausgeführt als kontinuierlicher Prozeß, gekennzeichnet durch die Verfahrensschritte Entfernen eines Anteils der Schmelze und Wiederauffüllen der Schmelze mit Stahlschrott, wobei das Kohlendioxid enthaltende Gas kontinuierlich in die Schmelze während des Heizens der Schmelze injiziert wird.

3. Verfahren nach Anspruch 1 oder 2, dadurch gekennzeichnet, daß das Kohlendioxid über einen feuerfesten porösen Körper auf Basis von Aluminiumoxid-Siliciumdioxid, Chromit oder Zirkonit in die geschmolzene Charge eingeblasen wird.

4. Verfahren nach einem der vorhergehenden Ansprüche, gekennzeichnet durch den zusätzlichen Verfahrensschritt des Entfernens des in Lösung befindlichen Kohlendioxidgases aus der dem Ofen entnommenen Stahlschmelze durch Behandlung des entnommenen Stahls mit einem Metall aus der Gruppe bestehend aus Aluminium, Magnesium, Barium, Calcium, Zirkonium oder Titan.

5. Verfahren nach einem der vorhergehenden Ansprüche 1 bis 3, gekennzeichnet durch den weiteren Verfahrensschritt des Entfernens des in Lösung befindlichen Kohlendioxids aus der dem Ofen entnommenen Stahlschmelze durch Spülen der Stahlschmelze mit einem Inertgas.

6. Verfahren nach einem der vorhergehenden Ansprüche, dadurch gekennzeichnet, daß das Kohlendioxid in einem geringen Abstand unterhalb der Oberfläche der Schmelze durch die Schmelze geblasen wird.

7. Verfahren nach einem der vorhergehenden Ansprüche, gekennzeichnet durch den Einsatz von annähernd 1,39 $m^3$ Kohlendioxid pro Tonne Stahlschrott.

8. Verfahren nach einem der vorhergehenden Ansprüche, dadurch gekennzeichnet, daß der elektrische Ofen ein Lichtbogenofen ist und der Ofen vor dem Schmelzbeginn mit Kohlendioxid gespült wird.

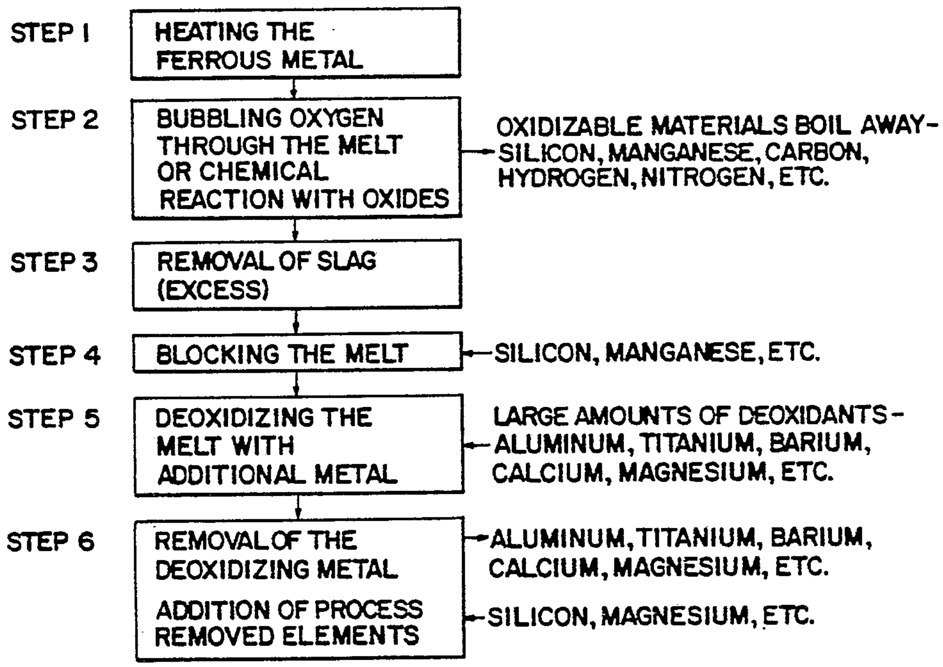
STEP 1
HEATING THE FERROUS METAL
STEP 2
BUBBLING OXYGEN THROUGH THE MELT OR CHEMICAL REACTION WITH OXIDES
OXIDIZABLE MATERIALS BOIL AWAY-SILICON, MANGANESE, CARBON, HYDROGEN, NITROGEN, ETC.
STEP 3
REMOVAL OF SLAG (EXCESS)
STEP 4
BLOCKING THE MELT
SILICON, MANGANESE, ETC.
STEP 5
DEOXIDIZING THE MELT WITH ADDITIONAL METAL
LARGE AMOUNTS OF DEOXIDANTS-ALUMINUM, TITANIUM, BARIUM, CALCIUM, MAGNESIUM, ETC.
STEP 6
REMOVAL OF THE DEOXIDIZING METAL
ALUMINUM, TITANIUM, BARIUM, CALCIUM, MAGNESIUM, ETC.
ADDITION OF PROCESS REMOVED ELEMENTS
SILICON, MAGNESIUM, ETC.

*Fig. 1*

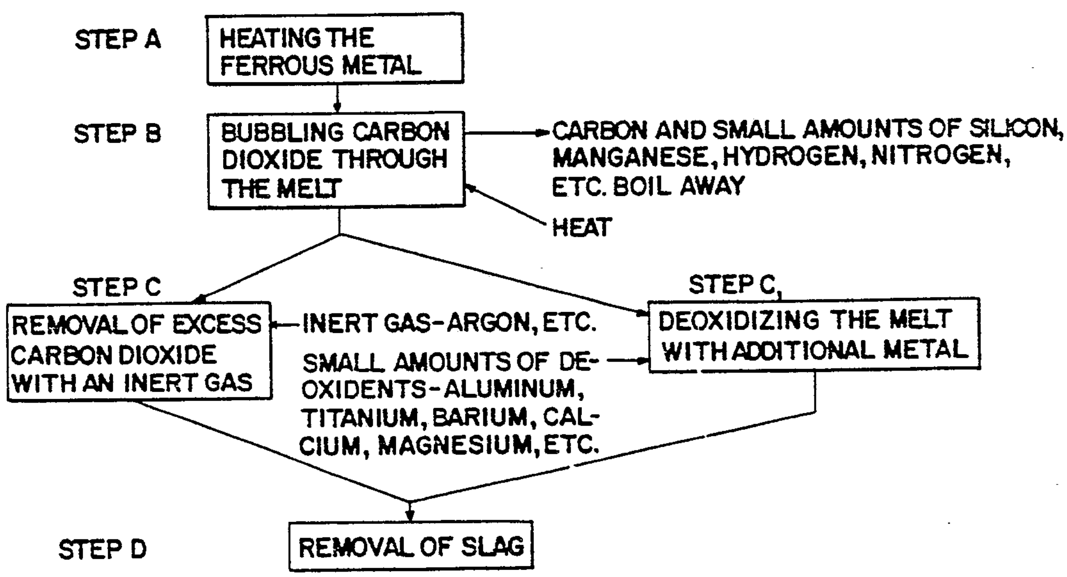
STEP A
HEATING THE FERROUS METAL
STEP B
BUBBLING CARBON DIOXIDE THROUGH THE MELT
CARBON AND SMALL AMOUNTS OF SILICON, MANGANESE, HYDROGEN, NITROGEN, ETC. BOIL AWAY
HEAT
STEP C
REMOVAL OF EXCESS CARBON DIOXIDE WITH AN INERT GAS
INERT GAS-ARGON, ETC.
STEP C,
DEOXIDIZING THE MELT WITH ADDITIONAL METAL
SMALL AMOUNTS OF DE-OXIDENTS-ALUMINUM, TITANIUM, BARIUM, CAL-CIUM, MAGNESIUM, ETC.
STEP D
REMOVAL OF SLAG

*Fig. 2*

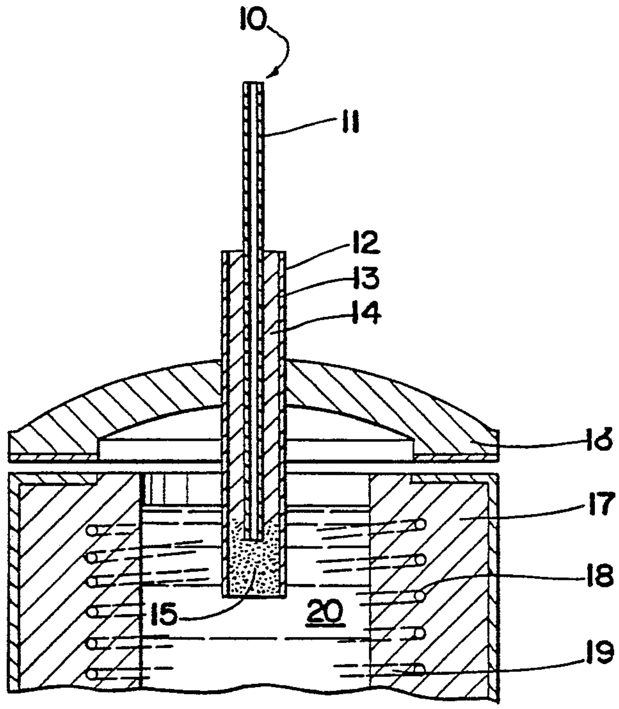


Fig. 3

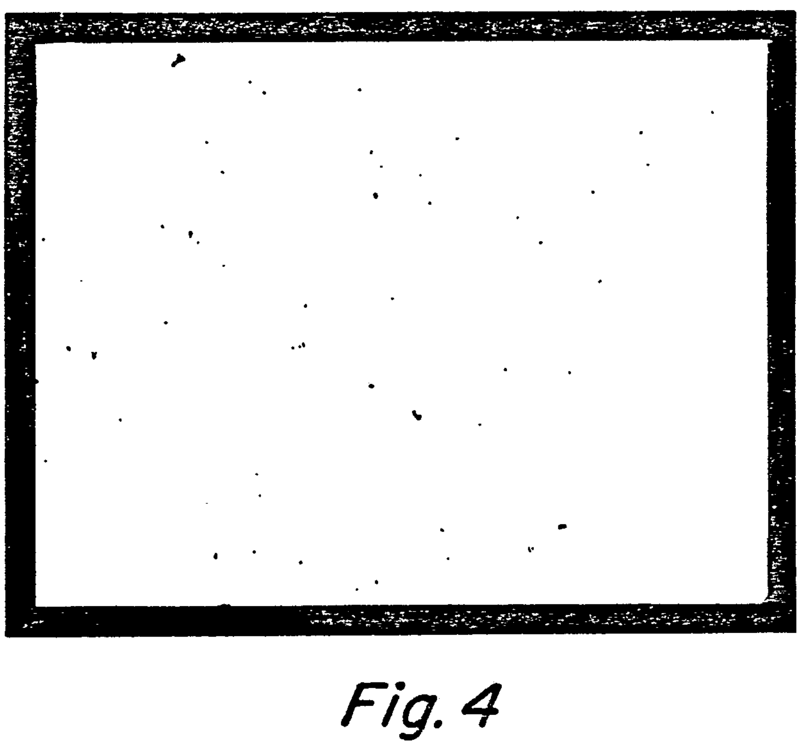

Fig. 4